## Europäisches Patentamt
## European Patent Office
## Office européen des brevets

(11) Publication number: **0 147 138**
**B1**

(12) **EUROPEAN PATENT SPECIFICATION**

(45) Date of publication of patent specification: **08.03.89**

(51) Int. Cl.⁴: **H 04 N 5/21,** H 04 N 5/91

(21) Application number: **84308709.9**

(22) Date of filing: **13.12.84**

(54) **Circuit for preventing flicker.**

(30) Priority: **13.12.83 JP 233481/83**
**13.12.83 JP 233482/83**
**13.12.83 JP 233483/83**

(43) Date of publication of application:
**03.07.85 Bulletin 85/27**

(45) Publication of the grant of the patent:
**08.03.89 Bulletin 89/10**

(84) Designated Contracting States:
**DE FR GB NL**

(56) References cited:
**US-A-3 886 589**
**US-A-4 090 218**
**US-A-4 121 250**
**US-A-4 412 251**

(73) Proprietor: **FUJI PHOTO FILM CO., LTD.**
**210 Nakanuma Minami Ashigara-shi**
**Kanagawa 250-01 (JP)**

(72) Inventor: **Kawamura, Keiichi c/o Fuji Photo Film**
**Co., Ltd.**
**No. 798 Miyanodai Kaiseicho**
**Ashigarakami-Gun Kanagawa-ken (JP)**

(74) Representative: **Horton, Andrew Robert Grant**
**et al**
**Boult, Wade & Tennant 27 Furnival Street**
**London EC4A 1PQ (GB)**

Courier Press, Leamington Spa, England.

## Description

This invention relates to a circuit for preventing flicker occurring in a television apparatus on conversion of a field signal to a frame signal.

More particularly the invention relates to a circuit of the above kind which improves the response of a feedback clamping loop and can prevent occurrence of undesirable sagging during the vertical synchronizing period. This invention relates also to a flicker preventive circuit which can reliably prevent appearance of flicker without being adversely affected by the temperature dependencies and secular variations of various parts of the field signal-frame signal conversion system and without requiring severe adjustments of such parts.

In television, so-called interlaced scanning is employed in which a picture is scanned with horizontal scanning lines skipped at a rate of one or more lines so as to minimize the influence of flicker perceptible to the eye. Most widely employed in this field is 2:1 interlaced scanning in which alternate horizontal scanning lines are skipped during scanning of an even field and an odd field. According to 2:1 interlaced scanning, a rough picture called a field is produced by one vertical scanning, and two fields are superposed to provide a complete picture called a frame. The field repetition rate is 60 fields per second according to, for example, the NTSC standards, and, in this case, the frame repetition rate is 30 frames per second. One frame is completed generally with 525 horizontal scanning lines. The point of beginning of horizontal scanning of an odd field is displaced from that of an even field by 1/2 of one horizontal scanning period or 0.5H.

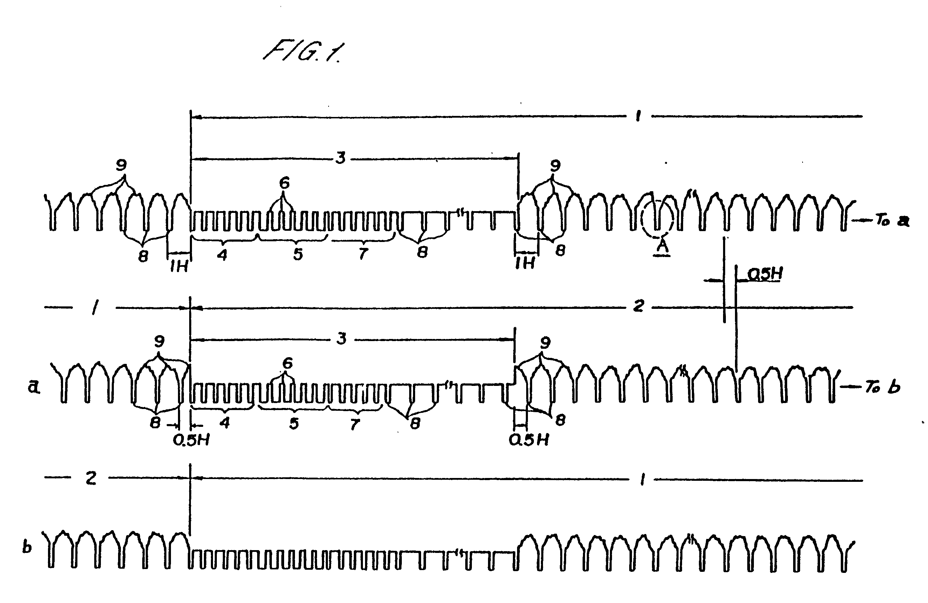

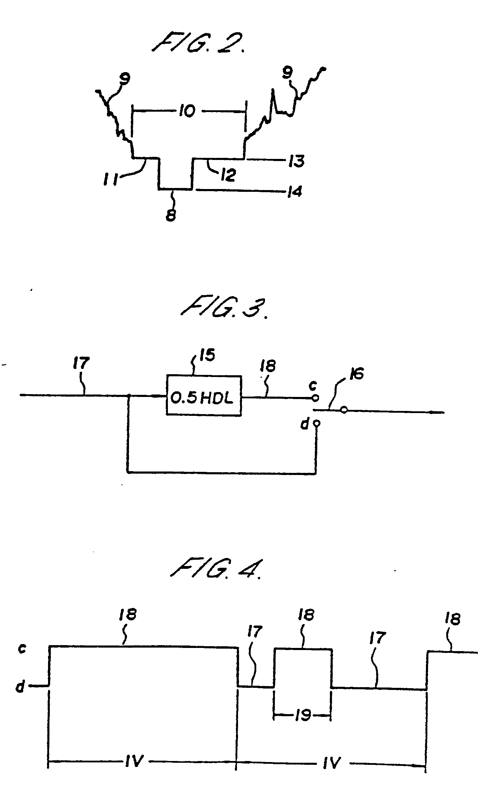

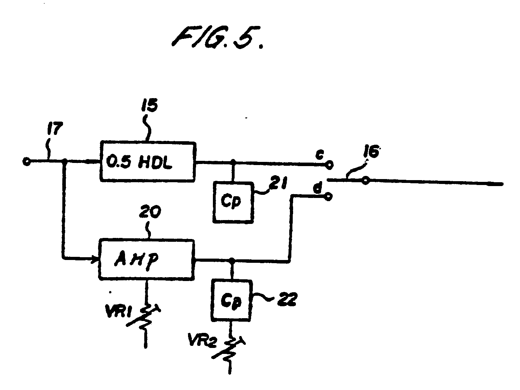

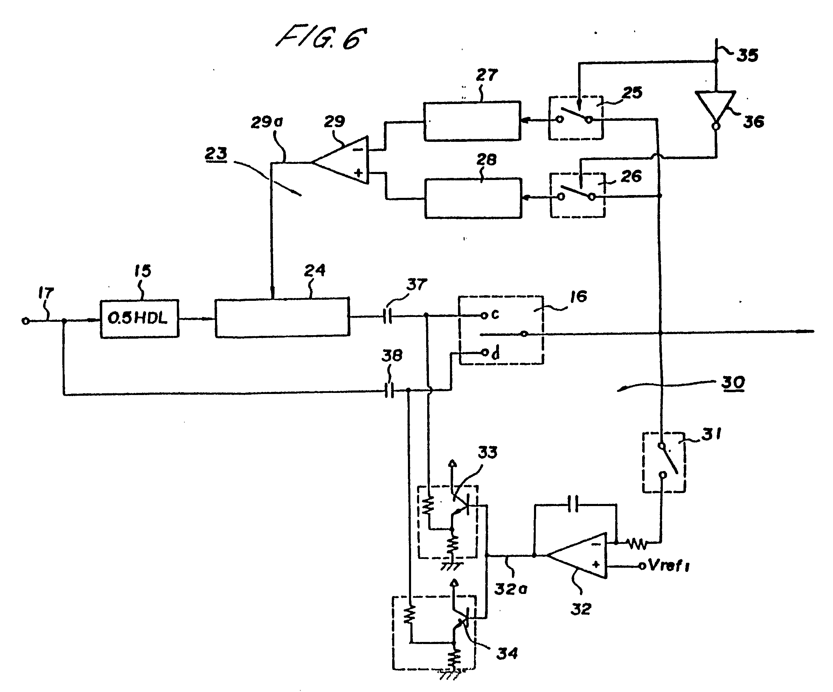

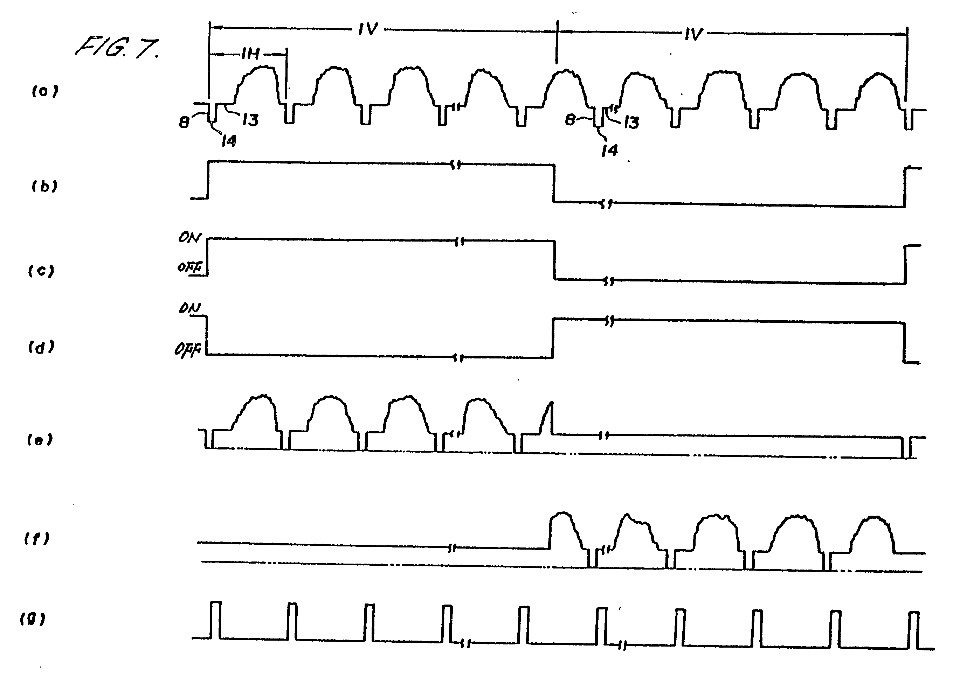

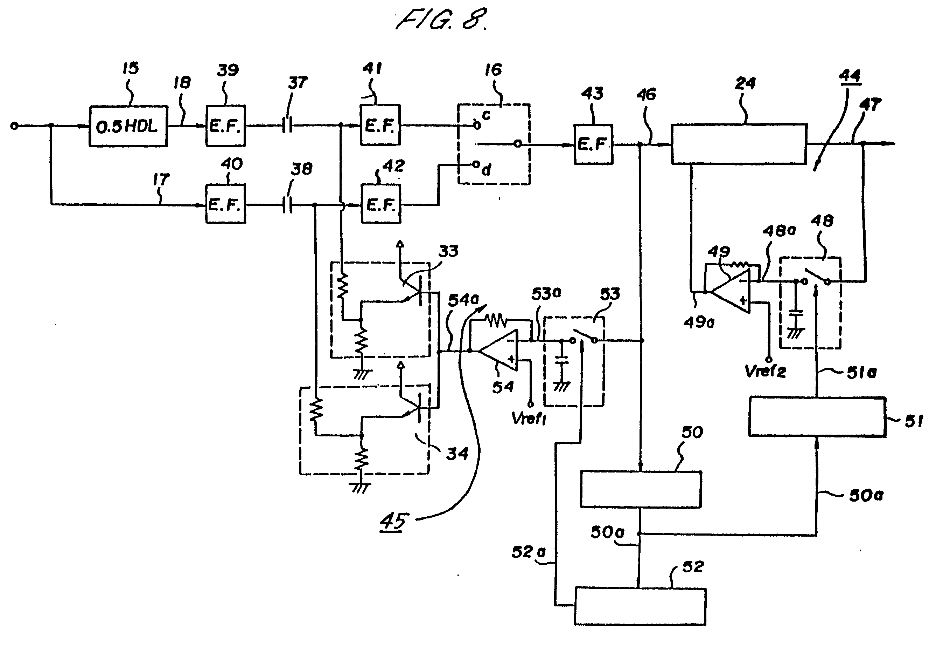

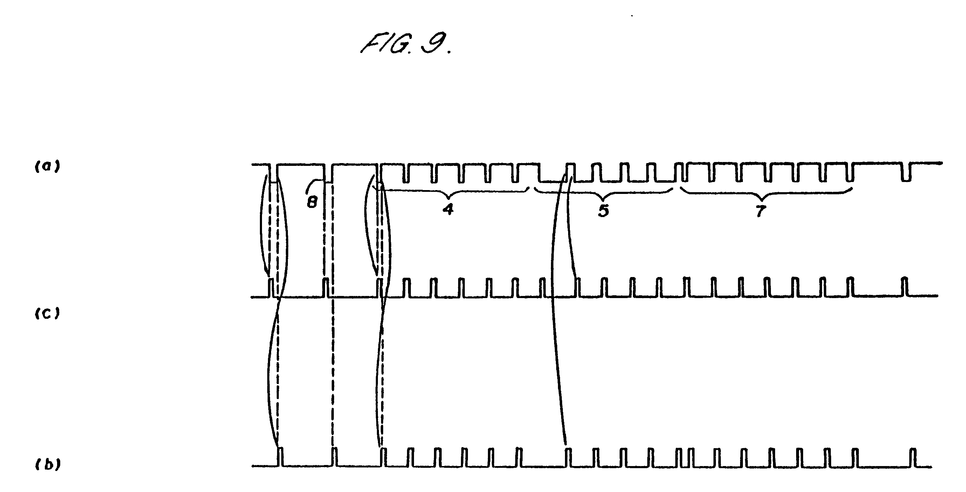

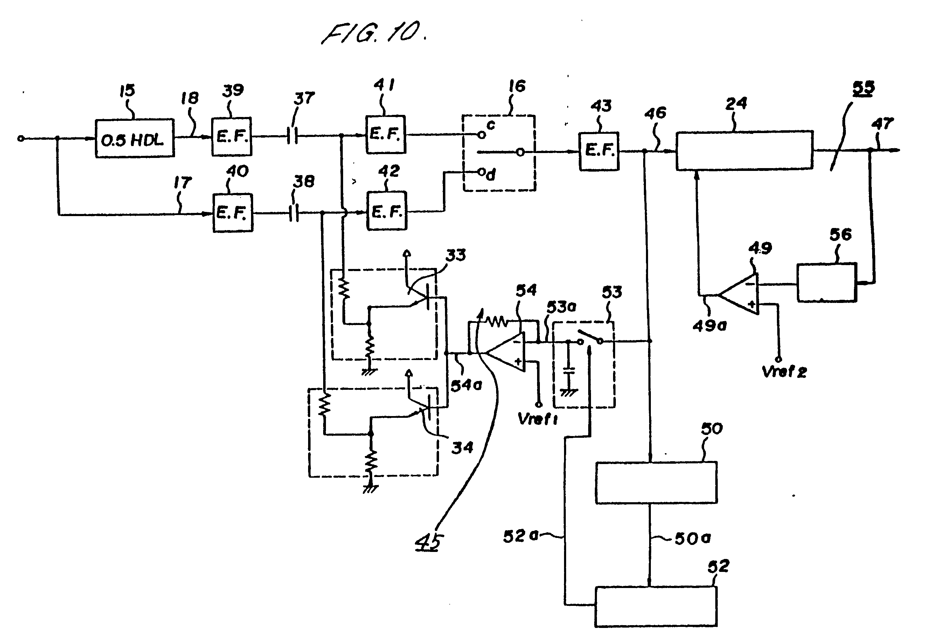

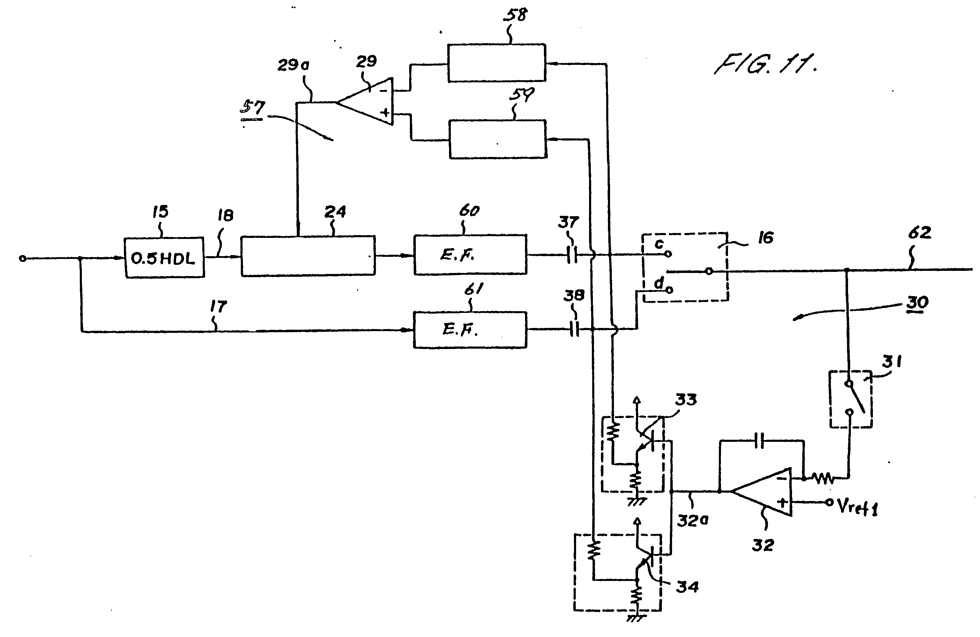

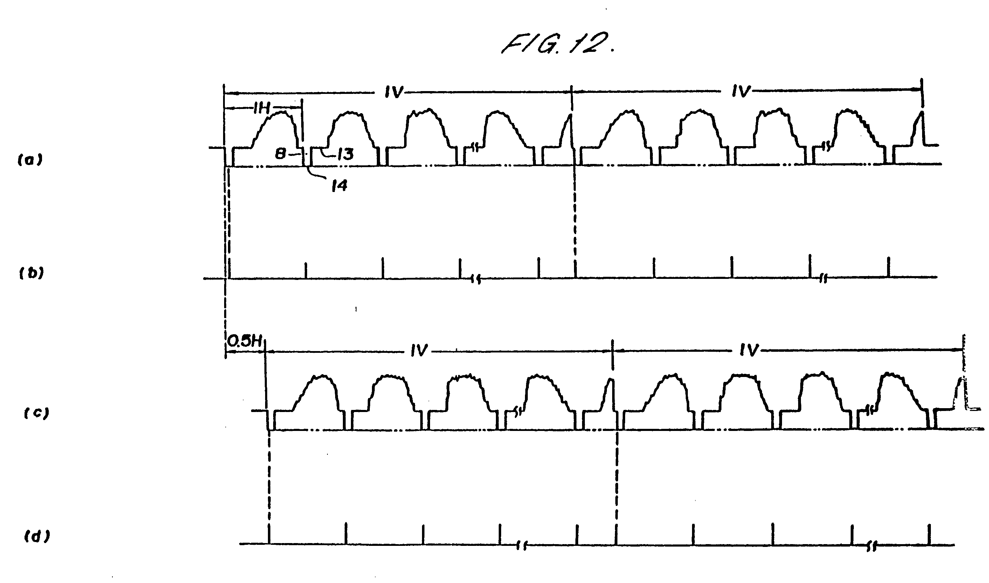

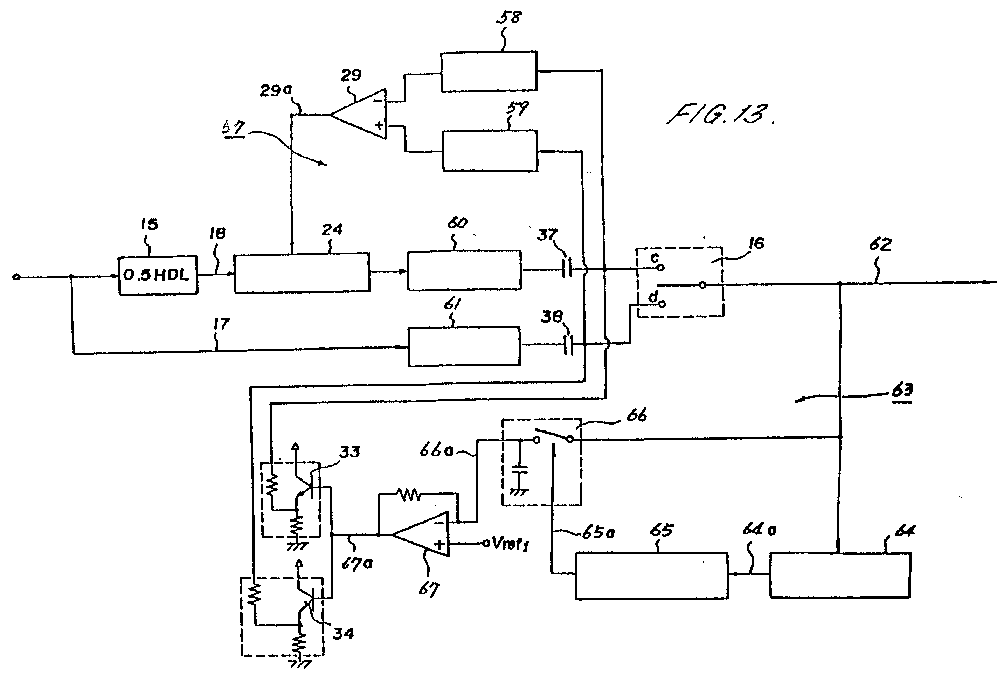

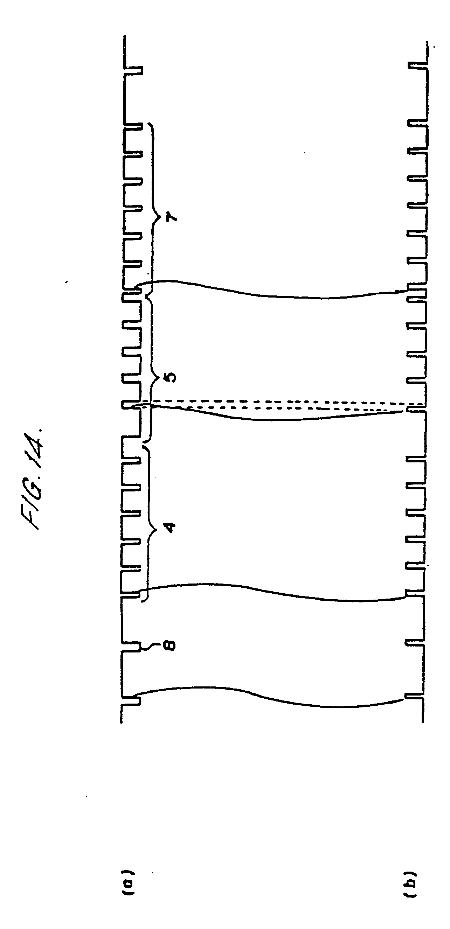

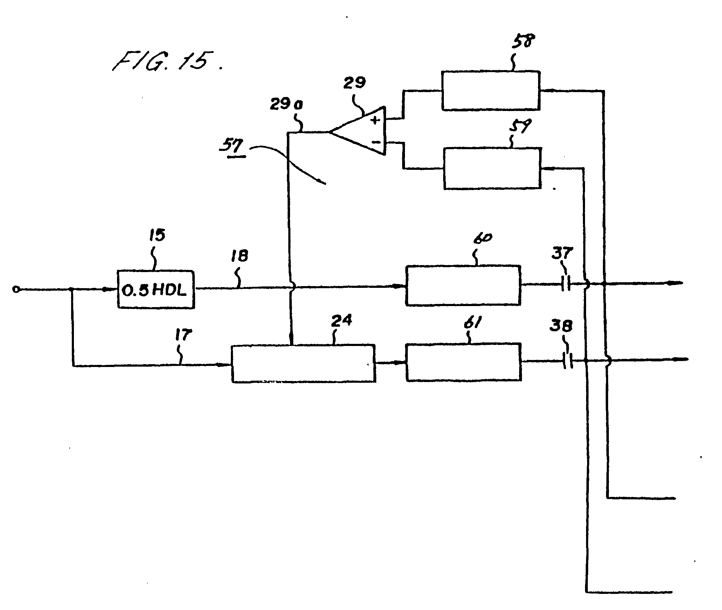

Figure 1 of the drawings shows a typical example of a composite video signal (a frame signal) representing a frame, and including a field signal 1 representing an odd field in the composite video signal (the frame signal), and a field signal 2 representing an even field in the composite video signal (the frame signal). Reference numerals 3, 4, 5, 6, 7, 8 and 9 designate a vertical blanking period, front equalizing pulses, a vertical synchronizing signal, serrating pulses, back equalizing pulses, a horizontal synchronizing signal, and a video signal, respectively.

A portion A in Figure 1 is shown to an enlarged scale in Figure 2 of the drawings, in which reference numerals 10, 11, 12, 13 and 14 designate a horizontal blanking period, a front porch, a back porch, a pedestal level, and a sync tip level, respectively.

In recording a video signal on a magnetic tape, a magnetic disk or any other recording medium, it is customary that a signal of one field is allotted to one track or a signal of one frame is allotted to one track. Also, the one-field/one-track recording method is classified into the so-called one-frame/two track recording method in which an odd field and an even field constituting a frame are sequentially recorded on two adjacent tracks respectively, and the so-called one-field recording method in which only one of an odd field and an even field only is recorded on one track.

In the case of reproduction of a record recorded according to the one-field recording method, the so-called field/frame conversion mode is most frequently employed in which, utilizing the strong vertical correlation of horizontal scanning lines in a video signal, the same track is scanned twice to reproduce a frame signal from a field signal of one kind. This field/frame conversion mode is intended principally to improve the recording density so as to enable long-time recording in the case of a movie recording and to increase the number of pictures in the case of a still recording. However, in the case of conversion from a field signal to a frame signal, the effect of interlaced scanning cannot be realized by merely repeatedly reproducing the same field signal twice. This is because mere repetition of reproduction of the same field signal twice cannot provide the relative time lag of 0.5H although this relative time lag of 0.5H is actually required between the odd field 1 and the even field 2 in Figure 1 for the purpose of attaining the effect of interlaced scanning, as will be readily seen from the relation between the vertical synchronizing signal 5 and the horizontal synchronizing signal 8 and the video signal 9 in the individual lines.

With a view to obtaining the effect of interlaced scanning, it is a common practice to attain conversion from a field signal to a frame signal in a manner illustrated in Figure 3 of the drawings where the same field signal is repeatedly reproduced on line 17 and passed or not passed through a 0.5H delay line 15, under the control of an analog switch 16 which is actuated to alternately select the field signal or the 0.5H delayed field signal on line 18 at a time interval of one vertical scanning period (IV), thereby attaining the desired conversion from a field signal to a frame signal.

However, when the arrangement shown in Figure 3 is employed directly, there will occur a relative time lag of 0.5H between the vertical synchronizing signals in successive field signals.

To deal with such a trouble, a method as, for example, shown in Figure 4 is proposed for selectively changing between the contacts c and d of the analog switch 16. It will be seen in Figure 4 that, in the period allotted for direct feed of the field signal on line 17, the portion 19 between the front equalizing pulse and the back equalizing pulse is used for feed of the 0.5H delayed field signal on line 18.

However, due to the fact that the provision of the delay line 15 not only gives rise to a delay in transmission time but also leads to considerable attenuation of the signal, and also due to the fact that the offset voltage of the analog switch 16 differs between the two contacts c and d thereof, the converted frame signal includes a signal level difference and a pedestal level difference between the even and odd fields, resulting in appearance of flicker on the reproduced picture.

A circuit as shown in Figure 5 of the drawings has heretofore been employed so as to prevent appearance of such flicker. Referring to Figure 5, this flicker preventing circuit includes an amplifier 20, clamping circuits 21, 22, a gain-adjusting potentiometer $VR_1$ and a clamp-level adjusting potentiometer $VR_2$ associated with the combination of the 0.5H delay line 15 and the analog switch 16 of Figure 3. The gain of the amplifier 20 is adjusted by the gain-adjusting potentiometer $VR_1$ so that the converted frame signal has the same signal level in each field, and the clamping level is adjusted by the clamping-level adjusting potentiometer $VR_2$ so that the converted frame signal has the same pedestal level in each field. The above adjustment is usually made manually by the operator. Therefore, the circuit of Figure 5 is unfit to meet the severe adjustment requirement of − 40 dB or more demanded for preventing flicker, and is also unfit for mass production. Also, because the 0.5H delay line 15, analog switch 16, amplifier 20 and clamping circuits 21, 22 tend to undergo secular variations in addition to their inherent temperature dependencies, it has been impossible to completely eliminate the appearance of flicker attributable to the temperature dependences and secular variations of those parts, even when the appearance of flicker has been eliminated temporarily by adjustment of the potentiometers $VR_1$ and $VR_2$.

A flicker preventing circuit which can automatically prevent the appearance of flicker in field signal/frame signal conversion as described above, regardless of the temperature dependencies and secular variations of its components, is described in Japanese Patent Application No. 58—189202, and will now be described with reference to Figures 6 and 7 of the drawings, in which Figure 6 is a circuit diagram of the automatic flicker preventing circuit, and Figure 7 illustrates the operation of various parts of the circuit of Figure 6.

Referring to Figure 6, the automatic flicker preventing circuit includes a 0.5H delay line 15, a field-selecting analog switch 16, and an AGC loop 23 and a feedback-clamping loop 30. The AGC loop 23 acts to maintain constant the sync tip level (14 in Figure 2) and includes an automatic gain controller 24, the field-selecting analog switch 16, two input-selecting switches 25, 26, two peak detectors 27, 28, and a differential amplifier 29.

The analog switch 16 presents a frame signal shown in Figure 7(a) as its output, and the input selecting switches 25 and 26 are turned on/off as shown in Figures 7(c) and 7(d) respectively under control of a switch control pulse signal 35, which is shown in Figure 7(b) and selectively passed through an inverter 36. Consequently, the frame signal is applied to the peak detectors 27 and 28 at a time interval of IV as shown in Figures 7(e) and 7(f) respectively. Thus, the peak value of, for example, the even field signal detected by one of the peak detectors, e.g. the peak detector 27, and the peak value of, for example, the odd field signal detected by the other peak detector 28, are applied to the differential amplifier 29, and the output signal 29a of the differential amplifier 29 indicative of the difference is applied to control the automatic gain controller 24 so as to attain coincidence of the peak values of the even and odd fields. When the peak values are the same and constant, the sync level and the signal level are maintained constant. The time constant selected is such that the AGC loop 23 responds to at least the unit field so that the signal level of a succeeding field signal becomes equal to that of a preceding field signal.

On the other hand, the feedback-clamping loop 30 acts to maintain constant the pedestal level (13 in Figure 2) and includes a sampling switch 31, an integrating circuit 32 and two clamping circuits 33, 34, besides the field selecting switch 16, Figure 7(g) shows the sampling timing of the sampling switch 31. The sampling switch 31 samples the pedestal level in each horizontal scanning period, and the integrating circuit 32 holds the sampled value and compares it with a reference value $Vref_1$. The resultant difference signal 32a is applied from the integrating circuit 32 to the clamping circuits 33 and 34 each of which generates an output signal providing the pedestal level, so as to attain coincidence of the pedestal levels in the individual horizontal scanning periods. The time constant of this feedbackclamping loop 30 is selected to be less than several H at the most so that the clamping level can be stabilized within the period of 1H to 2H after changeover between the fields. Thus, flicker can be eliminated as early as possible even in the presence of variations in the characteristics of the two clamping circuits 33 and 34. Two capacitors 37 and 38 shown in Figure 6 are provided for the purpose of DC cut-off.

In the flicker preventing circuit described above, the difference between the peak values (the sync tip levels) of an even field and an odd field is detected, and an automatic gain controller is controlled on the basis of the detected difference signal thereby maintaining constant the signal level in each of the fields. Also, according to the above circuit, the pedestal level is sampled at a time interval of one horizontal scanning period (1H) to find the difference between the detected pedestal level and a reference value, and the clamping level is controlled on the basis of the detected difference signal thereby maintaining constant the pedestal level in each of the horizontal scanning periods. Therefore, temperature dependencies and secular variations that may be present in the components of the field signal frame signal conversion circuit would not exert any substantial influence on the operation of the flicker preventing circuit, and the appearnce of flicker is minimized. Further, the flicker preventing circuit is suitable for mass-production since the signal level and the pedestal level can be automatically adjusted.

Although the above described flicker preventing circuit is advantageous in various aspects, there are still two points which can be improved.

In the first place, with the feedback-clamping loop in the form shown in Figure 6, the pedestal level cannot be sampled in the vertical scanning period when a sampling pulse signal produced in synchronism with HD pulses derived from a synchronizing signal generator (SSG) is used for turning on/off the sampling switch 31. Accordingly, instead of making sampling of the pedestal level in the vertical scanning period, the voltage holding time of the integrating circuit 32 must be extended to about 4H so as to deal with the above situation. However, this leads to a problem of occurrence of a sag in the vertical scanning period and leads also to a problem of delayed response of the feedback-clamping loop. Further, there is the disadvantage that a synchronizing signal generator (SSG) and a sampling cancelling circuit are additionally required.

Secondly, the holding time of at least IV required for each of the peak detectors 27 and 28 has limited the response speed of the AGC loop, since these peak detectors 27 and 28 receive their input signals at a time interval of IV only. Unless the AGC loop can respond sufficiently quickly, the AGC loop may not properly function in response to, for example, on/off of the power source or on/off of the input signal, On the other hand, the peak detectors 27 and 28 are provided independently of each other for detecting the peak values of the direct and delayed field signals respectively. Accordingly, when the temperature dependence of one of the peak detectors differs from that of the other, it leads to appearance of flicker although the flicker may not be very appreciable.

According to one aspect of the present invention there is provided a circuit for preventing flicker occurring on conversion of a field signal to a frame signal, including delay means operative to delay a field signal supplied thereto by one half of a horizontal scanning period; a switching means operative to pass alternately the field signal directly or a delayed field signal from the delay means, the switching means being operated at a frequency of one vertical scanning period, and the output of the switching means being a frame signal; a feedback clamping loop comprising a sample and hold means sampling the pedestal level of the frame signal appearing at the output of the switching means, a clamping voltage generating means operative to compare the output signal from the sample and hold means with a reference value and generate a voltage signal proportional to the difference therebetween, and two clamping means connected to the direct and delayed field signal supply lines to the switching means respectively and controlled by the output signal from the clamping voltage generating means to maintain constant the pedestal level of the direct and delayed field signals, characterised by a synchronizing signal separating means operative to separate a synchronizing signal from the frame signal appearing at the output of the switching means, and a sampling pulse generating means operative in response to the application of a separated synchronizing signal to generate a sampling pulse signal synchronous with the change points from the sync tip level to the pedestal level and having a pulse width equal to or smaller than that of the serrating pulses in the frame signal, the sampling pulse signal being applied to the sample and hold means in the feedback clamping loop.

According to another aspect of the present invention there is provided a circuit for preventing flicker occurring on conversion of a field signal to a frame signal, including delay means operative to delay a field signal supplied thereto by one half of a horizontal scanning period; a switching means operative to pass alternately the field signal directly or a delayed field signal from the delay means, the switching means being operated at a frequency of one vertical scanning period, and the output of the switching means being a frame signal; a feedback clamping loop comprising a sample and hold means sampling the pedestal level of the frame signal appearing at the output of the switching means, a clamping voltage generating means operative to compare the output signal from the sample and hold means with a reference value and generate a voltage signal proportional to the difference therebetween, and two clamping means connected to the direct and delayed field signal supply lines to the switching means respectively and controlled by the output signal from the clamping voltage generating means to maintain constant the pedestal level of the direct and delayed field signals, characterised by an automatic gain control loop comprising an automatic gain controller operative to amplify the frame signal appearing at the output of the switching means, a peak detecting means operative to detect the peak value of the amplified frame signal in each horizontal blanking period, and a gain-control voltage generating means operative to compare the output signal of the peak detecting means with a reference value and generate a voltage signal proportional to the difference therebetween, the voltage signal being applied to the automatic gain controller to maintain constant the sync tip level of the amplified frame signal.

According to a further aspect of the present invention there is provided a circuit for preventing flicker occurring on conversion of a field signal to a frame signal, including delay means operative to delay a field signal supplied thereto by one half of a horizontal scanning period; a switching means operative to pass alternately the field signal directly or a delayed field signal from the delay means, the switching means being operated at a frequency of one vertical scanning period, and the output of the switching means being a frame signal; a feedback clamping loop comprising a sample and hold means sampling the pedestal level of the frame signal appearing at the output of the switching means, a clamping voltage generating means operative to compare the output signal from the sample and hold means with a reference value and generate a voltage signal proportional to the difference therebetween, and two clamping means connected to the direct and delayed field signal supply lines to the switching means respectively and controlled by the output signal from the clamping voltage generating means to maintain constant the pedestal level of the direct and delayed field signals, an automatic gain control loop comprising an automatic gain controller connected in either the direct field signal line or delayed field signal line to the switching means, a first peak detecting means connected to the direct field signal line at the input to the switching means and operative to detect the peak value of the direct field signal in each horizontal blanking period, a second peak detecting means connected to the delayed field signal line at the input to the switching means and operative to detect the peak value of the delayed field signal in each horizontal blanking period, and a differential amplifier operative to generate an output signal indicative of the difference between the peak values detected by the first and second peak detecting means, which output signal is applied to the automatic gain controller to maintain the sync tip level of the controlled signal constant.

This invention will now be described by way of example with reference to the drawings, in which:-

Figure 1 illustrates a frame signal;

Figure 2 shows an enlarged detail view of a portion A of the signal shown in Figure 1;

Figure 3 is a circuit diagram illustrating a basic principle of conversion of a field signal to a frame signal;

Figure 4 illustrates the operation of the circuit shown in Figure 3;

Figure 5 is a circuit diagram of a known flicker preventing circuit;

Figure 6 is a circuit diagram of a prior proposal for an automatic flicker preventing circuit;

Figure 7 illustrates the operation of various parts of the circuit shown in Figure 6;

Figure 8 is a circuit diagram of an embodiment of this invention;

Figure 9 illustrates the operation of various parts of the circuit shown in Figure 8;

Figure 10 is a circuit diagram of another embodiment of this invention;

Figure 11 is a circuit diagram of another embodiment of this invention;

Figure 12 illustrates the operation of various parts of the circuit shown in Figure 11;

Figure 13 is a circuit diagram of another embodiment of this invention;

Figure 14 illustrates the operation of the circuit shown in Figure 13; and

Figure 15 is a circuit diagram of part of a further embodiment of this invention.

Figures 1 to 7 of the drawings have been described above and will not therefore be described again.

The same reference numerals have been used for corresponding parts throughout the drawings.

Referring to Figure 8, the embodiment of the present invention here shown comprises a 0.5H delay line 15, a change-over switch 16, an automatic gain controller 24, clamping circuits 33 and 34, DC cut-off capacitors 37 and 38, impedance-converting emitter follower circuits 39 to 43, an AGC loop 44, and a feedback-clamping loop 45. Reference numerals 17 and 18 designate a direct field signal and a 0.5H delayed field signal respectively.

The feedback-clamping loop 45 includes a synchronizing signal separating means 50 operative to separate a synchronizing signal 50a from a frame signal 46 appearing from the switch 16, a sampling pulse generating means 52 operative to produce a sampling pulse signal 52a on the basis of the separated synchronizing signal 50a, a sample and hold means 53 operative to sample the pedestal level of the frame signal 46 in response to the sampling pulse signal 52a, a clamping voltage generating means 54 operative to compare the output signal 53a of the sample and hold means 53 with a reference value $Vref_1$ and generate a voltage signal 54a proportional to the difference therebetween, and two clamping circuits 33 and 34 connected to the delayed and direct field signal lines 18 and 17, respectively.

The waveform of the separated synchronizing signal 50a is shown in Figure 9(a), and that of the sampling pulse signal 52a is shown in Figure 9(b). It will be seen in Figure 9(b) that the sampling pulse signal 52a is synchronous with the rising edges of the pulses of the synchronizing signal 50a, that is, synchronous with the change points from the sync tip level to the pedestal level of the signal 50a, and the pulse width of the signal 52a is equal to or smaller than that of the serrating pulses 6 appearing in the vertical synchronizing period 5 (Figure 1). Therefore, the sample and hold means 53 can detect the pedestal level during the entire period including the vertical blanking period 3 (Figure 1) of the frame signal 46.

The clamping voltage generating means 54 compares the sampled pedestal level with the reference value $Vref_1$ and applies its output signal 54a indicative of the difference therebetween to the clamping means 33 and 34 so that the direct and delayed field signals 17 and 18 have the same and constant pedestal level. Therefore, the feedback-clamping loop 45 can clamp the pedestal level during the entire period including the vertical blanking period. Also, since the sampling interval is not longer than 1H, the required voltage holding time of the sample and hold means 53 is as short as only about 1H, so that the feedback-clamping loop 45 can respond quickly.

In the embodiment shown in Figure 8, the sampling pulse signal 52a for sampling the pedestal level is produced on the basis of the synchronizing signal 50a separated from the frame signal 46. By producing the sampling pulse signal synchronous with the rising edges of the synchronizing signal, that is, the change points from the sync tip level to the pedestal level, the pedestal level can be sampled even in the vertical synchronizing period. Therefore, the feedback-clamping on the basis of the sampled pedestal level eliminates an undesirable sag appearing in the vertical synchronizing period. Further, due to the fact that the voltage holding time of the sample and hold means 53 is short or only about 1H, the clamping operation is done with a good response performance regardless of on/off of the power source or position of the switch 16. Furthermore, no special unit such as a synchronizing signal generator (SSG) for producing horizontal synchronizing pulses (HD pulses) is necessary.

The structure and function of the AGC loop 44 employed in the embodiment shown in Figure 8 will now be described. This AGC loop 44 includes the automatic gain controller 24 operative to amplify the frame signal 46 applied from the switch 16, a sample and hold means 48 operative to sample the peak, that is, the sync tip level of the amplified frame signal 47, a gain-control voltage generating means 49 operative to compare the output signal 48a of the sample and hold means 48 with a reference value $Vref_2$ and generate a voltage signal 49a proportional to the difference therebetween, the synchronizing signal separating means 50 operating to separate the synchronizing signal 50a from the frame signal 46, and a sampling pulse generating means 51 operative to produce a sampling pulse signal 51a on the basis of the separated synchronizing signal 50a. This sampling pulse signal 51 has a waveform as shown in Figure 9(c). It will be seen in Figure 9(c) that the sampling pulse signal 51a is synchronous with the falling edges, that is, the change points from the pedestal level to the sync tip level of the synchronizing signal 50a, and its pulse width is equal to or smaller than that of the serrations of the sync level or equalizing pulses in the equalizing periods 4 and 7 (Figure 1). Therefore, the sample and hold means 48 can detect the sync tip level during the entire period including the vertical blanking period 3 (Figure 1) of the amplified frame signal 47. Thus, the sample and hold means 48 operates as a peak detector. The gain-control voltage generating means 49 compares the output signal 48a of the sample and hold means 48 with the reference value $Vref_2$, and applies a voltage signal 49a indicative of the difference therebetween to the automatic gain controller 24, so that the sync tip level of the amplified frame signal 47 can be maintained constant. Therefore, the required voltage holding time of the sample and hold means 48 is short or only about 1H, so that the AGC loop 44 can respond very quickly. Thus, the AGC loop 44 makes its AGC operation immediately in response to on/off of the power source or operation of the switch 16.

The AGC loop 23 in the known flicker preventing circuit shown in Figure 6 includes two peak detectors 27 and 28, and a difference between the temperature dependencies of these two peak detectors 27 and 28 can result in the appearance of flicker. In contrast, the AGC loop 44 in the circuit shown in Figure 8 includes only one peak detector. Thus, no flicker attributable to the temperature dependence of the single peak detector appears.

The embodiment of the invention shown in Figure 10 is a modification of the embodiment shown in Figure 8 in that its AGC loop 55 only is slightly different from the AGC loop 44 shown in Figure 8. Referring to Figure 10, the AGC loop 55 includes a peak detector 56 combined with the automatic gain controller 24 and the gain-control voltage generating means 49. The sampling pulse generating means 51 shown in Figure 8 is eliminated. The peak detector 56 detects the peak value, that is, the sync tip level of the amplified frame signal 47. Thus, when the voltage holding time is selected to be about 1H, the AGC loop 55 can respond very quickly as in the case of the embodiment shown in Figure 8. Further, since only one peak detector 56 is provided for the peak detection, no flicker atributable to the temperature dependence of the single peak detector 56 appears.

In each of the AGC loops 44 and 55 shown in Figures 8 and 10 respectively, the frame signal 46 obtained by conversion of the direct and delayed field signals 17 and 18 by the switch 16 is amplified by the automatic gain controller 24, and the peak value (the sync tip leve1) of the amplified frame signal 47 is detected by the peak detecting circuit 48 or 56 to be compared with the reference value $Vref_2$. The automatic gain controller 24 is so controlled that the peak value of the amplified frame signal 47 can be maintaned constant. Therefore, only one peak detecting circuit suffices, and there is always an input applied thereto.

Since the input signal is always applied to the peak detecting circuit, the voltage holding time which is as short as about 1H, suffices, and the AGC loop can respond very quickly. Also, since only one peak detecting circuit is provided, no flicker attributable to the temperature dependence of the single peak detecting circuit appears.

The feedback-clamping loop 45 shown in each of Figures 8 and 10 may be replaced by that 30 shown in Figure 6. In such a case, however, it is a general procedure that a sampling pulse signal is produced on the basis of HD pulses from a synchronizing signal generator (SSG) and is applied to the sampling switch 31. Therefore, it is normally impossible to sample the pedestal level during the vertical synchronzing period 5 (Figure 1), and it becomes necessary to extend the voltage holding time of the integrating circuit 32 to a considerably longer period of about 4H. From this aspect, the feedback-clamping loop 45 shown in each of Figures 8 and 10 is advantageous over the loop 30 shown in Figure 6 in that the capability of clamping of the pedestal level even in the vertical synchronizing period eliminates occurrence of an undesirable sag, and the quick response ensures immediate starting of the clamping operation in response to on/off of the power source or operation of the switch 16.

The flicker preventing circuit shown in Figure 11 is an improvement in the known circuit shown in Figure 6. The structure shown in Figure 11 is the same as that shown in Figure 6 except that two peak detectors 58 and 59 each having a voltage holding time of about 1H are disposed in a stage preceding the switch 16, and the clamped signal from the clamping circuits 33 and 34 is directly applied to the peak detectors 58 and 59 respectively to constitute an AGC loop 57. In Figure 11, emitter follower circuits 60 and 61 are provided for the purpose of impedance conversion.

The operation of the flicker preventing circuit shown in Figure 11 will now be described. The field signal 18 passed through the 0.5H delay line 15 is applied to one of the peak detectors, e.g. peak detector 58 (Figure 12(c)), and, at the same time, the direct field signal 17 is applied to the other peak detector 59 (Figure 12(a)). The two peak detectors 58 and 59 detect the peak values, that is, the sync tip levels of the respective field signals at a time interval of 1H, and their output signals indicative of the detected sync tip levels (Figs. 12(d) and 12(b)) respectively are applied to the differential amplifier 29. The differential amplifier 29 applies its output signal 29a, proportional to the difference between the two inputs, to the automatic gain controller 24 to control the gain so that coincidence can be achieved between the sync tip levels of the direct field signal 17 and the delayed field signal 18. The voltage holding time required for each of the peak detectors 58 and 59 is as short as about 1H, since they always have inputs thereto unlike those shown in Figure 6. Therefore, the AGC loop 57 can respond very quickly. The feedback-clamping loop 30 in Figure 11 is the same as that shown in Figure 6. In the loop 30, the pedestal level of the frame signal 62 sampled by the sampling switch 31 is held in the integrating circuit 32 and also compared with the reference value $Vref_1$. The clamping potential signal 32a proportional to the difference therebetween is applied from the integrating circuit 32 to the clamping means 33 and 34 to control the latter, thereby maintaining constant the pedestal level.

The peak detectors 58 and 59 in Figure 11 may be either peak detecting means or sample and hold means. However, it is necessary to set the detection timing so that the sync tip level of each field signal can be detected in a manner as shown in Figure 12.

Figure 13 shows an embodiment which includes a modified feedback-clamping loop designated generally by the reference numeral 63. In Figure 13, the AGC loop 57 is the same as that shown in Figure 11. The feedback-clamping loop 63 in the embodiment shown in Figure 13 is improved in its response speed compared with the loops 30 shown in Figures 6 and 11, and reduces the possibility of a sag which may occur during the vertical synchronizing period 5 (Figure 1). In other words, in the case of the loops 30 shown in Figures 6 and 11, it is a general procedure that the sampling switch 31 is actuated by a sampling pulse signal produced on the basis of HD pulses from a synchronizing signal generator (SSG).

Therefore, as previously described, it is normally unable to sample the pedestal level during the vertical synchronizing period 5, and it becomes necessary to extend the voltage holding time of the integrating circuit 32 to a considerably long period of about 4H.

The feedback-clamping loop 63 in the embodiment shown in Figure 13 includes a synchronizing signal separating means 64 operative to separate the synchronizing signal 64a from the frame signal 62 obtained from the switch 16, a sampling pulse generating means 65 operative to produce a sampling pulse signal 65a on the basis of the separated synchronizing signal 64a, a sample and hold means 66 operative to sample the pedestal level of the frame signal 62 in response to the sampling pulse signal 65a, a clamping voltage generating means 67 operative to compare the output signal 66a of the sample and hold means 66 with a reference value $Vref_1$ and generate a voltage signal 67a proportional to the difference therebetween, and the aforementioned two clamping means 33 and 34 connected to the delayed and direct field signal lines 18 and 17, respectively.

The waveform of the separated synchronizing signal 64a is shown in Figure 14(a), and that of the sampling pulse signal 65a is shown in Figure 14(b). It will be seen in Figure 14(b) that the sampling pulse signal 65a is synchronous with the rising edges of the pulses. that is, the change points from the sync tip level to the pedestal level of the synchronizing signal 64a, and the pulse width of the signal 65a is equal to or smaller than that of the serrating pulses 6 appearing in the vertical synchronizing period 5 (Figure 1). Therefore, the sample and hold means 66 can detect the pedestal level during the entire period including the vertical blanking period 3 (Figure 1) of the frame signal 62.

The clamping voltage generating means 67 compares the sampled pedestal level with the reference valve $Vref_1$ and applies its output signal 67a indicative of the difference therebetween to the clamping means 33 and 34 so that the direct and delayed field signals 17 and 18 have the same and constant pedestal level. Therefore, the feedback-clamping loop 63 can clamp the pedestal level during the entire period including the vertical blanking period. Also, since the sampling interval is not longer than 1H, the required voltage holding time of the sample and hold circuit 66 is as short as only about 1H, so that the feedback-clamping loop 63 can operate with a high response speed.

Although the automatic gain controller 24 is inserted in the same signal line as the 0.5H delay line 15 in the embodiments shown in Figures 11 and 13, it may otherwise be inserted in the direct field signal line. In such a case, it is preferable that the peak detectors 58 and 59 are connected to the plus and minus input terminals respectively of the differential amplifier 29 as shown in Figure 15, unlike the connections shown in Figures 11 and 13.

In each of the embodiments shown in Figures 11, 13 and 15, the peak values of the direct field signal and delayed field signal respectively are detected before being converted into the frame signal. Therefore, the two peak detecting circuits 58 and 59 always have input signals applied thereto, and the voltage holding time is as short as about 1H, so that the AGC loop can make the AGC operation with a very high response speed. It is apparent that the frame signal after conversion can be automatically controlled to have the same signal level between the fields, because the automatic gain controller 24 is controlled by the difference signal indicative of the difference between the peak values of the direct and delayed field signals. It is also apparent that the pedestal level of the frame signal can be automatically maintained constant, because the pedestal level of the field-frame converted signal is sampled at the time interval of one horizontal scanning period (1H) so as to control the clamping level of the direct and delayed field signals before being converted into the frame signal.

Therefore, even in the presence of temperature dependencies and/or secular variations in the components of the field signal/frame signal conversion circuit, appearance of flicker can be minimized. Also, by virtue of the fact that the signal level and pedestal level can be automatically adjusted, the manual adjustment required hitherto during the manufacturing process is unnecessary, and the flicker preventing circuit is suitable for mass-production.

## Claims

1. A circuit for preventing flicker occurring on conversion of a field signal to a frame signal, including delay means (15) operative to delay a field signal (17) supplied thereto by one half of a horizontal scanning period; a switching means (16) operative to pass alternately the field signal (17) directly or a delayed field signal (18) from the delay means (15), the switching means (16) being operated at a frequency of one vertical scanning period, and the output of the switching means (16) being a frame signal; a feedback clamping loop comprising a sample and hold means sampling the pedestal level of the frame signal appearing at the output of the switching means (16), a clamping voltage generating means operative to compare the output signal from the sample and hold means with a reference value and generate a voltage signal proportional to the difference therebetween, and two clamping means connected to the direct and delayed field signal supply lines (17, 18) to the switching means (16) respectively and controlled by the output signal from the clamping voltage generating means to maintain constant the pedestal level of the direct and delayed field signals (17, 18), characterised by a synchronising signal separating means (50) operative to separate a synchronizing signal (50a) from the frame signal appearing at the output of the switching means (16), and a sampling pulse generating means (52) operative in response to the application of a separated synchronizing signal (50a) to generate a sampling pulse signal (52a) synchronous with the change points from the sync tip level to the pedestal level and having a pulse width equal to or smaller than that of the serrating pulses in the frame signal (46), the sampling pulse signal (52a) being applied to the sample and hold means (53) in the feedback clamping loop (45).

2. A circuit for preventing flicker occurring on conversion of a field signal to a frame signal, including delay means (15) operative to delay a field signal (17) supplied thereto by one half of a horizontal scanning period; a switching means (16) operative to pass alternately the field signal (17) directly or a delayed field signal (18) from the delay means (15), the switching means (16) being operated at a frequency of one vertical scanning period, and the output of the switching means (16) being a frame signal; a feedback clamping loop comprising a sample and hold means sampling the pedestal level of the frame signal appearing at the output of the switching means (16), a clamping voltage generating means operative to compare the output signal from the sample and hold means with a reference value and generate a voltage signal proportional to the difference therebetween, and two clamping means connected to the direct and delayed field signal supply lines (17, 18) to the switching means (16) respectively and controlled by the output signal from the clamping voltage generating means to maintain constant the pedestal level of the direct and delayed field signals (17, 18) characterised by an automatic gain control loop (44) comprising an automatic gain controller (24) operative to amplify the frame signal (46) appearing at the output of the switching means (16), a peak detecting means (48 or 56) operative to detect the peak value of the amplified frame signal (47) in each horizontal blanking period, and a gain-control voltage generating means (49) operative to compare the output signal (48a) of the peak detecting means (48 or 56) with a reference value and generate a voltage signal (49a) proportional to the difference therebetween, the voltage signal (49a) being applied to the automatic gain controller (24) to maintain constant the sync tip level of the amplified frame signal (47).

3. A circuit as claimed in Claim 2, characterised in that the peak detecting means (56) has a voltage hold time of about one horizontal scanning period.

4. A circuit as claimed in Claim 3, characterised by a synchronizing signal separating means (50) operative to separate a synchronizing signal from the frame signal (46) appearing at the output of the switching means (16), and a sampling pulse generating means (51) which in response to the separated synchronizing signal (50a) from the synchronizing signal separating means (50), operates to generate a sampling pulse signal (51a) synchronous with the change points from the pedestal level to the sync tip level and having a pulse width equal to or smaller than that of the equalising pulses, the sampling pulse signal (51a) being applied to the peak detecting means (48) which functions as a sample and hold means.

5. A circuit as claimed in Claim 4, characterised by a second sampling pulse generating means (52) which in response to the separated synchronizing signal (50a) from the synchronizing signal separating means (50), operates to generate a sampling pulse signal (52a) synchronous with the change points from the sync tip level to the pedestal level and having a pulse width equal to or smaller than that of the serrating pulses, the sampling pulse signal (52a) being applied to the sample and hold means (53) of the feedback clamping loop (45).

6. A circuit for preventing flicker occurring on conversion of a field signal to a frame signal, including delay means (15) operative to delay a field signal (17) supplied thereto by one half of a horizontal scanning period; a switching means (16) operative to pass alternately the field signal (17) directly or a delayed field signal (18) from the delay means (15), the switching means (16) being operated at a frequency of one vertical scanning period, and the output of the switching means (16) being a frame signal; a feedback clamping loop comprising a sample and hold means sampling the pedestal level of the frame signal appearing at the output of the switching means (16), a clamping voltage generating means operative to compare the output signal from the sample and hold means with a reference value and generate a voltage signal proportional to the difference therebetween, and two clamping means connected to the direct and delayed field signal supply lines (17, 18) to the switching means (16) respectively and controlled by the output signal from the clamping voltage generating means to maintain constant the pedestal level of the direct and delayed field signals (17, 18), an automatic gain control loop (57) comprising an automatic gain controller (24) connected in either the direct field signal line (17) or delayed field signal line (18) to the switching means (16), a first peak detecting means (59) connected to the direct field signal line (17) at the input to the switching means (16) and operative to detect the peak value of the direct field signal in each horizontal blanking period, a second peak detecting means (58) connected to the delayed field signal line (18) at the input to the switching means (16) and operative to detect the peak value of the delayed field signal in each horizontal blanking period, and a differential amplifier (29) operative to generate an output signal (29a) indicative of the difference between the peak values detected by the first and second peak detecting means (59, 58), which output signal (29a) is applied to the automatic gain controller (24) to maintain the sync tip level of the controlled signal constant.

7. A circuit as claimed in Claim 6, characterised in that each of the first and second peak detecting means (59, 58) has a voltage holding time of about one horizontal scanning period.

8. A circuit as claimed in Claim 7, characterised in that each of the first and second peak detecting means (59, 58) is a sample and hold means.

9. A circuit as claimed in Claim 6, Claim 7 or Claim 8, characterised in that the feedback clamping loop (63) includes a synchronizing signal separating means (64) operative to separate a synchronizing signal (64a) from the frame signal (62) appearing at the output of the switching means (16), and a sampling pulse generating means (65) operative in response to the application of the separated synchronizing signal (64a) to generate a sampling pulse signal (65a) synchronous with the change points from the sync tip level to the pedestal level and having a pulse width equal to or smaller than that of the serating pulses, the sampling pulse signal (65a) being applied to the sample and hold means (66) in the feedback clamping loop (63).

**Patentansprüche**

1. Schaltung zum Verhindern von Flimmern, das bei der Umwandlung eines Halbbildsignals in ein Vollbildsignal auftritt, enthaltend eine Verzögerungseinrichtung (15) zum Verzögern eines ihr zugeführten Halbbildsignals (17) um eine Hälfte einer Horizontalablenkperiode; eine Schalteinrichtung (16) zum alternierenden Durchlassen des Halbbildsignals (17) unverzögert oder eines von der Verzögerungseinrichtung (15) verzögerten Halbbildsignals (18), die mit einer Frequenz einer Vertikalablenkperiode betrieben wird und deren Ausgang ein Vollbildsignal ist; eine Rückkopplungsklemmschleife mit einer Tastspeicherschaltung, die den Schwarzpegel des Vollbildsignals abtastet, das am Ausgang der Schalteinrichtung (16) erscheint, einer Klemmspannungserzeugungseinrichtung zum Vergleichen des Ausgangssignals der Tastspeicherschaltung mit einem Bezugswert und zum Erzeugen eines Spannungssignals, das proportional der durch den Vergleich ermittelten Differenz ist, und zwei Klemmeinrichtungen, die mit den Zuführleitungen für das unverzögerte bzw. für das verzögerte Halbbildsignal (17, 18) zu der Schalteinrichtung (16) verbunden sind und durch das Ausgangssignal von der Klemmspannungserzeugungseinrichtung gesteuert sind, um den Schwarzpegel der unverzögerten und verzögerten Halbbildsignale (17, 18) konstant zu halten, gekennzeichnet durch eine Synchronsignalabtrenneinrichtung (50) zum Abtrennen eines Synchronsignals (50a) aus dem Vollbildsignal, das am Ausgang der Schalteinrichtung (16) erscheint, und eine Tastimpulserzeugungseinrichtung (52), die in Abhängigkeit von der Zuführung eines abgetrennten Synchronsignals (50a) ein Tastimpulssignal (52a) synchron mit den Übergangspunkten vom Synchronspitzenpegel zum Schwarzpegel mit einer Impulsbreite erzeugt, die gleich oder kleiner als die der Sägezahnimpulse im Vollbildsignal (46) ist, wobei das Tastimpulssignal (52a) der Tastspeicherschaltung (53) in der Rückkopplungsklemmschleife (45) zugeführt ist.

2. Schaltung zum Verhindern des Flimmerns, das bei der Umwandlung eines Halbbildsignals in ein Vollbildsignal auftritt, enthaltend eine Verzögerungseinrichtung (15) zur Verzögerung eines ihr zugeführten Halbbildsignals (17) um eine Hälfte einer Horizontalablenkperiode; eine Schalteinrichtung (16) zum alternierenden Durchlassen des Halbbildsignals (17) unverzögert oder eines von der Verzögerungseinrichtung (15) verzögerten Halbbildsignals (18), die mit einer Frequenz einer Vertikalablenkperiode betrieben wird und deren Ausgang ein Vollbildsignal ist; eine Rückkopplungsklemmschleife mit einer Tastspeicherschaltung, die den Schwarzpegel des Vollbildsignals abtastet, das am Ausgang der Schalteinrichtung (16) erscheint, einer Klemmspannungserzeugungseinrichtung zum Vergleichen des Ausgangssignals der Tastspeicherschaltung mit einem Bezugswert und zum Erzeugen eines Spannungssignals, das proportional der durch den Vergleich ermittelten Differenz ist, und zwei Klemmeinrichtungen, die mit den Zuführleitungen (17, 18) des unverzögerten bzw. verzögerten Halbbildsignals zur Schalteinrichtung (16) verbunden sind und durch das Ausgangssignal der Klemmspannungserzeugungseinrichtung gesteuert sind, um den Schwarzpegel der unverzögerten und verzögerten Halbbildsignale (17, 18) konstant zu halten, gekennzeichnet durch eine automatische Verstärkungsregelschleife (44) mit einem automatischen Verstärkungsregler (24) zum Verstärken des am Ausgang der Schalteinrichtung (16) erscheinenden Vollbildsignals (46), einer Spitzendetektoreinrichtung (48 oder 56) zum Ermitteln des Spitzenwertes des verstärkten Vollbildsignals (47) in jeder Horizontalaustastperiode, und einer Verstärkungssteuerspannungerzeugungseinrichtung (49) zum Vergleichen des Ausgangssignals (48a) der Spitzendetektoreinrichtung (48 oder 56) mit einem Bezugswert und zum Erzeugen eines Spannungssignals (49a), das proportional der durch den Vergleich ermittelten Differenz ist, wobei das Spannungssignal (49a) dem automatischen Verstärkungsregler (24) zugeführt ist, um den Synchronspitzenpegel des verstärkten Vollbildsignals (47) konstant zu halten.

3. Schaltung nach Anspruch 2, dadurch gekennzeichnet, daß die Spitzendetektoreinrichtung (56) eine Spannungshaltezeit von etwa einer Horizontalablenkperiode hat.

4. Schaltung nach Anspruch 3, gekennzeichnet durch eine Synchronsignalabtrenneinrichtung (50) zum Abtrennen eines Synchronsignals aus dem Vollbildsignal (46), das am Ausgang der Schalteinrichtung (16) erscheint, und eine Tastimpulserzeugungseinrichtung (51), die in Abhängigkeit von dem von der Synchronsignalabtrenneinrichtung (50) abgetrennten Synchronsignal (50a) ein Tastimpulssignal (51a) synchron mit den Übergangspunkten von dem Schwarzpegel auf den Synchronspitzenpegel mit einer Impulsbreite erzeugt, die gleich oder kleiner als die der Abgleichimpulse ist, wobei das Tastimpulssignal (51a) der Spitzendetektoreinrichtung (48) zugeführt ist, die als Tastspeicherschaltung arbeitet.

5. Schaltung nach Anspruch 4, gekennzeichnet durch eine zweite Tastimpulserzeugungseinrichtung (52), die in Abhängigkeit von dem von der Synchronsignalabtrenneinrichtung (50) abgetrennten Synchronsignal (50a) ein Tastimpulssignal (52a) synchron mit den Übergangspunkten von dem Synchronspitzenpegel auf den Schwarzpegel mit einer Impulsbreite erzeugt, die gleich oder kleiner als die der Sägezahnimpulse ist, welches Tastimpulssignal (52a) der Tastspeicherschaltung (53) der Rückkopplungsklemmschleife (45) zugeführt ist.

6. Schaltung zum Verhindern des Flimmerns, das bei der Umwandlung eines Halbbildsignals in ein Vollbildsignal auftritt, enthaltend eine Verzögerungseinrichtung (15) zum Verzögern eines ihr zugeführten Halbbildsignals (17) um eine Hälfte einer Horizontalablenkperiode; eine Schalteinrichtung (16) zum alternierenden Durchlassen des Halbbildsignals (17) unverzögert oder eines von der Verzögerungseinrichtung (15) verzögerten Halbbildsignals (18), die mit einer Frequenz einer Vertikalablenkperiode betrieben ist und deren Ausgang ein Vollbildsignal ist;

eine Rückkopplungsklemmschleife mit einer Abtasthalteschaltung, die den Schwarzpegel des am Ausgang der Schalteinrichtung (16) erscheinenden Vollbildsignals abtastet, einer Klemmspannungserzeugungseinrichtung zum Vergleichen des Ausgangssignals der Tastspeicherschaltung mit einem Bezugswert und zum Erzeugen eines Spannungssignals, das proportional der durch den Vergleich ermittelten Differenz ist, und zwei Klemmeinrichtungen, die mit den Zuführleitungen für das unverzögerte bzw. verzögerte Halbbildsignal zu der Schalteinrichtung (16) verbunden sind und die durch das Ausgangssignal von der Klemmspannungserzeugungseinrichtung gesteuert sind, um den Schwarzpegel der unverzögerten und verzögerten Halbbildsignale (17, 18) konstant zu halten, einer automatischen Verstärkungsregelschleife (57) mit einem automatischen Verstärkungsregler (24), der entweder in der Zuführleitung des unverzögerten Halbbildsignals (17) oder in der Zuführleitung des verzögerten Halbbildsignals (18) zur Schalteinrichtung (16) angeordnet ist, einer ersten Spitzendetektoreinrichtung (59), die mit der Signalleitung für das unverzögerte Halbbildsignal (17) am Eingang der Schalteinrichtung (16) verbunden ist und den Spitzenwert des unverzögerten Halbbildsignals in jeder Horizontalaustastperiode ermittelt, einer zweiten Spitzendetektoreinrichtung (58), die mit der Signalleitung für das verzögerte Halbbildsignal (18) am Eingang der Schalteinrichtung (16) verbunden ist und den Spitzenwert des verzögerten Halbbildsignals in jeder Horizontalaustastperiode ermittelt, und einem Differenzverstärker (29) zum Erzeugen eines Ausgangssignals (29a), das für die Differenz zwischen den durch die ersten und zweiten Spitzendetektoreinrichtungen (59, 58) ermittelten Spitzenwerte kennzeichnend ist, welches Ausgangssignal (29a) dem automatischen Verstärkungsregler (24) zugeführt ist, um den Synchronspitzenpegel des geregelten Signals konstant zu halten.

7. Schaltung nach Anspruch 6, dadurch gekennzeichnet, daß jede der ersten und zweiten Spitzendetektoreinrichtungen (59, 58) eine Spannungshaltezeit von etwa einer Horizontalablenkperiode hat.

8. Schaltung nach Anspruch 7, dadurch gekennzeichnet, daß jede der ersten und zweiten Spitzendetektoreinrichtungen (59, 58) eine Tastspeicherschaltung ist.

9. Schaltung nach Anspruch 6, 7 oder 8, dadurch gekennzeichnet, daß die Rückkopplungsklemmschleife (63) eine Synchronsignalabtrenneinrichtung (64) zum Abtrennen eines Synchronsignals (64a) aus dem Vollbildsignal (62), das am Ausgang der Schalteinrichtung (16) erscheint, und eine Tastimpulserzeugungseinrichtung (65) aufweist, die in Abhängigkeit von der Zuführung des abgetrennten Synchronsignals (64a) ein Tastimpulssignal (65a) synchron mit den Übergangspunkten vom Synchronspitzenpegel auf den Schwarzpegel mit einer Impulsbreite erzeugt, die gleich oder kleiner als die der Sägezahnimpulse ist, welches Tastimpulssignal (65a) der Tastspeichereinrichtung (66) in der Rückkopplungsklemmschleife (63) zugeführt ist.

## Revendications

1. Un circuit pour empêcher l'apparition d'un papillotement au moment de la conversion d'un signal de trame en un signal d'image, comprenant des moyens de retard (15) qui retardent de la moitié d'une période de balayage horizontal un signal de trame (17) qui leur est appliqué; des moyens de commutation (16) qui transmettent alternativement le signal de trame (17) direct ou un signal de trame retardé (18) provenant des moyens de retard (15), les moyens de commutation (16) fonctionnant à une cadence qui correspond à une période de balayage vertical, et le signal de sortie des moyens de commutation (16) étant un signal d'image; une boucle de fixation de niveau par rétroaction qui comprend des moyens échantillonneurs-bloqueurs qui échantillonnent le niveau de suppression du signal d'image qui apparaît à la sortie des moyens de commutation (16), des moyens de génération de tension de fixation de niveau qui comparent le signal de sortie des moyens échantillonneurs-bloqueurs avec une tension de référence, et qui produisent un signal de tension proportionnel à la différence entre eux, et deux moyens de fixation de niveau qui sont respectivement connectés aux lignes d'application de signal de trame direct et retardé (17, 18) aux moyens de commutation (16), et qui sont commandés par le signal de sortie des moyens de génération de tension de fixation de niveau, pour maintenir constant le niveau de suppression des signaux de trame direct et retardé (17, 18), caractérisé par des moyens de séparation de signal de synchronisation (50) qui séparent un signal de synchronisation (50a) du signal d'image apparaissant à la sortie des moyens de commutation (16), et des moyens de génération d'impulsions d'échantillonnage (52) qui fonctionnent sous l'effet de l'application d'un signal de synchronisation séparé (50a), de façon à produire un signal d'impulsions d'échantillonnage (52a) qui est en synchronisme avec les points de transition du niveau de base des impulsions de synchronisation vers le niveau de suppression, et qui a une largeur d'impulsion inférieure ou égale à celle des impulsions de crénelure dans le signal d'image (46), le signal d'impulsions d'échantillonnage (52a) étant appliqué aux moyens échantillonneurs-bloqueurs (53) dans la boucle de fixation de niveau par rétroaction (45).

2. Un circuit pour empêcher l'apparition d'un papillotement au moment de la conversion d'un signal de trame en un signal d'image, comprenant des moyens de retard (15) qui retardent de la moitié d'une période de balayage horizontal un signal de trame (17) qui leur est appliqué; des moyens de commutation (16) qui transmettent alternativement le signal de trame (17) direct ou un signal de trame retardé (18) provenant des moyens de retard (15), les moyens de commutation (16) fonctionnant à une cadence correspondant à une période de balayage vertical, et le signal de sortie des moyens de commutation (16) étant un signal d'image; une boucle de fixation de niveau par rétroaction comprenant des moyens échantillonneurs-bloqueurs qui échantillonnent le niveau de suppression du signal d'image apparaissant à la sortie des moyens de commutation (16), des moyens de génération de tension de fixation de niveau qui comparent le signal de sortie des moyens échantillonneurs-bloqueurs avec une valeur de référence, et qui produisent un signal de tension proportionnel à la différence entre ces signaux, et deux moyens de fixation de niveau qui sont respectivement connectés aux lignes d'application de signal de trame direct et retardé (17, 18) aux moyens de commutation (16), et qui sont commandés par le signal de sortie qui provient des moyens de génération de tension de fixation de niveau, pour maintenir constant le niveau de suppression des signaux de trame direct et retardé (17, 18), caractérisé par une boucle de commande automatique de gain (44) comprenant un dispositif de commande automatique de gain (24) qui amplifie le signal d'image (46) apparaissant à la sortie des moyens de commutation (16), des moyens de détection de crête (48 ou 56) qui détectent la valeur de crête du signal d'image amplifié (47) dans chaque période d'effacement horizontal, et des moyens de génération de tension de commande de gain (49) qui comparent le signal de sortie (48a) des moyens de détection de crête (48 ou 56) avec une valeur de référence, et qui produisent un signal de tension (49a) proportionnel à la différence entre les signaux comparés, le signal de tension (49a) étant appliqué au dispositif de commande automatique de gain (24) pour maintenir constant le niveau de base des impulsions de synchronisation du signal d'image amplifié (47).

3. Un circuit selon la revendication 2, caractérisé en ce que les moyens de détection de crête (56) ont une durée de blocage de tension approximativement égale à une période de balayage horizontal.

4. Un circuit selon la revendication 3, caractérisé par des moyens de séparation de signal de synchronisation (50) qui séparent un signal de synchronisation du signal d'image (46) apparaissant à la sortie des moyens de commutation (16), et des moyens de génération d'impulsions d'échantillonnage (51) qui réagissent au signal de synchronisation séparé (50a) provenant des moyens de séparation de signal de synchronisation (50), en produisant un signal d'impulsions d'échantillonnage (51a) qui est en synchronisme avec les points de transition du niveau de suppression vers le niveau de base des impulsions de synchronisation, et qui a une largeur d'impulsion inférieure ou égale à celle des impulsions d'égalisation, le signal d'impulsions d'échantillonnage (51a) étant appliqué aux moyens de détection de crête (48) qui fonctionnent en moyens échantillonneurs bloqueurs.

5. Un circuit selon la revendication 4, caractérisé par des seconds moyens de génération d'impulsions d'échantillonnage (52) qui réagissent au signal de synchronisation séparé (50a) provenant des moyens de séparation de signal de synchronisation (50), en produisant un signal d'impulsions d'échantillonnage (52a) qui est en synchronisme avec les points de transition du niveau de base des impulsions de synchronisation vers le niveau de suppression, et qui a une largeur d'impulsion inférieure ou égale à celle des impulsions de crénelure, le signal d'impulsions d'échantillonnage (52a) étant appliqué aux moyens échantillonneurs-bloqueurs (53) de la boucle de fixation de niveau par rétroaction (45).

6. Un circuit pour empêcher l'apparition d'un papillotement au moment de la conversion d'un signal de trame en un signal d'image, comprenant des moyens de retard (15) qui retardent de la moitié d'une période de balayage horizontal un signal de trame (17) qui leur est appliqué; des moyens de commutation (16) qui transmettent alternativement le signal de trame (17) direct ou un signal de trame retardé (18) provenant des moyens de retard (15), les moyens de commutation (16) fonctionnant à une cadence qui correspond à une période de balayage vertical, et le signal de sortie des moyens de commutation (16) étant un signal d'image; une boucle de fixation de niveau par rétroaction comprenant des moyens échantillonneurs-bloqueurs qui échantillonnent le niveau de suppression du signal d'image apparaissant à la sortie des moyens de commutation (16), des moyens de génération de tension de fixation de niveau, qui comparent le signal de sortie des moyens échantillonneurs-bloqueurs avec une valeur de référence et qui produisent un signal proportionnel à la différence entre les signaux comparés, et deux moyens de fixation de niveau qui sont respectivement connectés aux lignes d'application de signal de trame direct et retardé (17, 18) aux moyens de commutation (16), et qui sont commandés par le signal de sortie des moyens de génération de tension de fixation de niveau, pour maintenir constant le niveau de suppression des signaux de trame direct et retardé (17, 18), une boucle de commande automatique de gain (57) qui comprend un dispositif de commande automatique de gain (24) connecté soit dans la ligne de signal de trame direct (17), soit dans la ligne de signal de trame retardé (18), allant vers les moyens de commutation (16), des premiers moyens de détection de crête (59) connectés à la ligne de signal de trame direct (17) à l'entrée des moyens de commutation (16), et qui détectent la valeur de crête du signal de trame direct dans chaque période d'effacement horizontal, des seconds moyens de détection de crête (58), connectés à la ligne de signal de trame retardé (18) à l'entrée des moyens de commutation (16), et qui détectent la valeur de crête du signal de trame retardé dans chaque période d'effacement horizontal, et un amplificateur différentiel (29) qui produit un signal de sortie (29a) représentatif de la différence entre les valeurs de crête qui sont détectées par les premiers et seconds moyens de détection de crête (59, 58), et ce signal de sortie (29a) est appliqué au dispositif de commande automatique de gain (24) pour maintenir constant le niveau de base des impulsions de synchronisation du signal commandé.

7. Un circuit selon la revendication 6, caractérisé en ce que les premiers et seconds moyens de détection de crête (59, 58) ont chacun une durée de blocage de tension d'environ une période de balayage horizontal.

8. Un circuit selon la revendication 7, caractérisé en ce que les premiers et seconds moyens de détection de crête (59, 58) sont respectivement des moyens échantillonneurs-bloqueurs.

9. Un circuit selon la revendication 6, la revendication 7 ou la revendication 8, caractérisé en ce que la boucle de fixation de niveau par rétroaction (63) comprend des moyens de séparation de signal de synchronisation (64) qui séparent un signal de synchronisation (64a) du signal d'image (62) qui apparaît à la sortie des moyens de commutation (16), et des moyens de génération d'impulsions d'échantillonnage (65) qui réagissent à l'application du signal de synchronisation séparé (64a) en produisant un signal d'impulsions d'échantillonnage (65a) qui est en synchronisme avec les points de transition du niveau de base des impulsions de synchronisation vers le niveau de suppression, et qui a une largeur d'impulsion inférieure ou égale à celle des impulsions de crénelure, le signal d'impulsions d'échantillonnage (65a) étant appliqué aux moyens échantillonneurs-bloqueurs (66) dans la boucle de fixation de niveau par rétroaction (63).

*FIG.1.*

To a

To b

EP 0 147 138 B1

*FIG. 2.*

*FIG. 3.*

*FIG. 4.*

## FIG.5.

FIG. 6

FIG. 7.

(a)

(b)

(c)

(d)

(e)

(f)

(g)

EP 0 147 138 B1

FIG. 8.

EP 0 147 138 B1

FIG. 9.

(a)

(c)

(b)

FIG. 10.

EP 0 147 138 B1

FIG. 11.

FIG. 12.

(a)

(b)

(c)

(d)

FIG.13.

FIG.14.

FIG. 15.